# EUROPEAN PATENT APPLICATION

(11) **EP 4 687 039 A1**
(43) Date of publication of application: **04.02.2026**
(21) Application number: 24191758.2
(22) Date of filing: 30.07.2024
(51) Int. Cl.: G06F 11/36, G06N 3/045, G06N 3/08, G06V 10/82, G06V 20/56

(54) **DOMAIN TRANSFER OF TRAFFIC IMAGES USING DIFFUSION MODELS**

(71) Applicant: dSPACE GmbH, 33102 Paderborn (DE)
(72) Inventor: Burdorf, Sven, 33102 Paderborn (DE); Hemion, Nikolas, 33102 Paderborn (DE)

(57) **Abstract**

Disclosed is a vehicle testing system (100, 300) comprising a memory (110) storing machine executable instructions (120) and a domain transfer diffusion model (122). The execution of the machine executable instructions causes a computational system (104) to: receive (200) a first sequence of traffic images (124) descriptive of the first set of environmental conditions with respectively assigned image labels (126); generate (202) a second sequence of traffic images (128) descriptive of the second set of environmental conditions as the output of a domain transfer diffusion model (122) by inputting the first sequence of traffic images into the domain transfer diffusion model; copy (204) the image labels from the first sequence of traffic images to corresponding images of the second sequence of traffic images; and provide (206) the second sequence of traffic images (130) with the image labels.

## Description

### FIELD OF THE INVENTION

The invention relates to the field of training of vehicle electronic control units, in particular the training of vehicle electronic control units using images.

### BACKGROUND

Training electronic control units (ECUs) for vehicles using images may use machine learning techniques to enable ECUs to perform such tasks as object recognition, the control of one or more components of a vehicle, or even autonomous driving. This process typically begins with collecting a vast dataset of vehicle-related images, such as road conditions, traffic signs, and various driving scenarios. These images are then annotated to highlight relevant features and objects. The annotated data is fed into neural networks, which are trained to recognize patterns and make decisions based on visual inputs. Through iterative training and validation, the ECUs learn to interpret and respond to real-world driving situations with increased accuracy and efficiency. This visual-based training improves the ECU's ability to support systems such as advanced driver assistance systems (ADAS), enhancing overall vehicle safety and performance.

### SUMMARY OF THE INVENTION

The invention provides for a vehicle testing system, a method of vehicle testing, and a computer program in the independent claims. Embodiments are given in the dependent claims.

In one aspect a vehicle testing system is disclosed. The vehicle testing system comprises a memory storing machine-executable instructions and a domain transfer diffusion model. The domain transfer diffusion model is configured for, in response to receiving a traffic image descriptive of a first set of environmental conditions, outputting a traffic image descriptive of a second set of environmental conditions. The vehicle testing system further comprises a computational system.

Execution of the machine-executable instructions causes the computational system to receive a first sequence of traffic images descriptive of the first set of environmental conditions. The traffic images of the first sequence of traffic images comprises respectively assigned image labels. Execution of the machine-executable instructions further causes the computational system to generate a second sequence of traffic images descriptive of the second set of environmental conditions as the output of the domain transfer diffusion model by inputting the first sequence of traffic images into the domain transfer diffusion model. Execution of the machine-executable instructions further causes the computational system to copy the image labels from the first sequence of traffic images to corresponding images of the second sequence of traffic images. Execution of the machine-executable instructions further causes the computational system to provide the second sequence of traffic images with the image labels.

In another aspect a method of vehicle testing is disclosed. The method comprises receiving a first sequence of traffic images descriptive of a first set of environmental conditions. The traffic images of the first sequence of traffic images comprise respectively assigned image labels. The method further comprises generating a second sequence of traffic images descriptive of a second set of environmental conditions as the output of a domain transfer diffusion model by inputting the first sequence of traffic images into the domain transfer diffusion model by inputting the first sequence of traffic images into the domain transfer diffusion model.

The domain transfer diffusion model is configured for, in response to receiving a traffic image descriptive of a first set of environmental conditions, outputting a traffic image descriptive of a second set of environmental conditions. The method further comprises copying the image labels from the first sequence of traffic images to corresponding images of the second sequence of traffic images. The method further comprises providing the second sequence of traffic images with the image labels.

In another aspect a computer program comprising machine-executable instructions configured for performing an example of the method is disclosed.

### BRIEF DESCRIPTION OF THE DRAWINGS

In the following, examples are described in greater detail making reference to the drawings in which:
Fig. 1 illustrates an example of a vehicle testing system.
Fig. 2 is a block diagram which illustrates a method of operating the vehicle testing system of Fig. 1.
Fig. 3 illustrates a further example of a vehicle testing system.
Fig. 4 is a block diagram which illustrates a method of operating the vehicle testing system of Fig. 3.
Fig. 5 shows an example of a traffic image.
Fig. 6 shows two examples of traffic images with different environmental conditions.
Fig. 7 illustrates the transfer of an image from the domain of a first set of environmental conditions to the domain of a second set of environmental conditions.
Fig. 8 illustrates a means of implementing a domain transfer diffusion model.
Fig. 9 illustrates an example of a denoising U-net with time embedding.
Fig. 10 illustrates several implementations of down sampling blocks and up sampling blocks for the U-net illustrated in Fig. 9.

### DETAILED DESCRIPTION

In the following, similar elements are denoted by the same reference numerals.

In an example, a vehicle testing system comprises a memory storing machine-executable instructions and a domain transfer diffusion model. A domain transfer diffusion model is a machine learning model that is configured to transfer images from one domain to another. The domain transfer diffusion model is configured for, in response to receiving a traffic image descriptive of a first set of environmental conditions, outputting a traffic image descriptive of a second set of environmental conditions.

The transfer between the domains defined by the environmental conditions is performed using a diffusion process. In this case adding noise to an image and then removing it using a denoising neural network. The environmental conditions may for example describe the amount of lighting and/or weather conditions. For example, the traffic image descriptive of the first set of environmental conditions may be a traffic image acquired on a bright sunny day. The second set of environmental conditions may for example represent various types of precipitation such as rain or snow. In other examples the environmental conditions between these two could be flipped.

The domain transfer diffusion model comprises a neural network which is trained for diffusion. In these types of neural networks noise is added to an image and then the neural network is trained to reverse the amount of added noise. Typically, when doing domain transfer, a number of noise steps will be added to the image being processed first. For example, the image may have small amounts of noise added to it tens or hundreds of times depending upon the amount of noise level. A neural network is then used to reverse the amount of noise and then return to an image which does not exhibit any noticeable noise. To do the domain transfer for example images which have only the second set of environmental conditions are used for training this denoising process. For example, in transferring from sunny to rainy conditions the neural network for the domain transfer diffusion model would be trained using only images exhibiting rainy conditions. The neural network then understands how to denoise images so that the images appear rainy. When the image with the first set of environmental conditions has noise added to it and then is denoised with this neural network the resulting image is more or less identical to the conditions in daylight except that the appearance and lighting reflect those of a rainy day.

The vehicle testing system further comprises a computational system. The computational system may for example comprise various types of processors, microprocessors, field-programmable gate arrays or computers. Execution of the machine-executable instructions causes the computational system to receive a first sequence of traffic images descriptive of the first set of environmental conditions. For example, for training an Al to control a vehicle there may be recordings of traffic images that are descriptive of the first set of environmental conditions. The traffic images of the first sequence of traffic images comprise respectively assigned image labels. Each frame of the first sequence of traffic images may comprise image labels which identify various objects in these traffic images. These may include road landmarks and signs, other vehicles, pedestrians, animals or other objects which may affect the road and driving conditions. Execution of the machine-executable instructions further causes the computational system to generate a second sequence of traffic images descriptive of the second set of environmental conditions as the output of the domain transfer diffusion model by inputting the first sequence of traffic images into the domain transfer diffusion model. For example, the first sequence of traffic images could be input frame-by-frame into the domain transfer diffusion model to obtain a one-to-one corresponding second sequence of traffic images. Each image has been converted from the first set of environmental conditions to the second set of environmental conditions.

Execution of the machine-executable instructions further causes the computational system to copy the image labels from the first sequence of traffic images to corresponding images of the second sequence of traffic images. In this step, the image labels from a frame of the first sequence of traffic images is copied to the corresponding frame of the second sequence of traffic images. Execution of the machine-executable instructions further causes the computational system to provide the second sequence of traffic images with the image labels. This may be beneficial because it not only provides the images with the second set of environmental conditions but the image labels which, as was mentioned above, identify such things as other vehicles, landmarks, signs, people, or other objects. Because the image labels have been transferred this may be useful in testing and training automated or assisted driving systems for vehicles. Another potential benefit is that the performance of an automated control module can be tested in the two different environmental conditions. Because the images only differ by the environmental conditions this provides a detailed means of testing and comparing the module for these different conditions.

In another example, the vehicle testing system further comprises an ECU or electronic control unit. The electronic control unit comprises an automated control module adapted for controlling components of a vehicle. The automated control module may for example be used to implement a driver assistance or an automated driving program or functionality for the vehicle. The memory further comprises a simulation program configured for testing the ECU. Execution of the machine-executable instructions further causes the computational system to control the simulation program to test operation of the ECU using the second sequence of traffic images. Execution of the machine-executable instructions further causes the computational system to detect faults in the operation of the ECU using the image labels. Faults in the operation of the ECU may for example be a failure to recognize objects, people, or other vehicles in the second sequence of traffic images or it may also represent incorrect control decisions or commands generated by the ECU in response to being tested with the simulation program and the second sequence of traffic images. This example may be beneficial because the ECU can be tested using the second set of environmental conditions without the need to generate a new set of image labels.

In another example, execution of the machine-executable instructions further causes the computational system to generate modification commands configured for modifying programming of the automated control module using the detected faults. Execution of the machine-executable instructions further causes the computational system to modify the automated control module using the modification commands. For example, the identification of the faults may be used for training Al or machine learning modules which are used to form the automated control module. This may for example provide for an improved means of training an automotive or vehicle ECU.

In another example, the automated control module is adapted for controlling any one of the following of a vehicle: for controlling a component of a vehicle, for a driving assistance function, an adaptive cruise control function, an autopilot function, an autonomous driving function, and combinations thereof. These various functionalities, which are possible to implement in an automated control module, may be beneficially trained using traffic images descriptive of various environmental conditions.

In another example, the automated control module comprises a neural network configured for receiving the second sequence of traffic images. The modification commands are training data. The automated control module is modified by training the neural network with the training data. This may be beneficial because it may provide a means of improving the training of the neural network. The neural network may have different properties in different examples. For example, the neural network may be used to perform object identification and provide bounding boxes for various objects in a sequence of traffic images. Providing the second sequence of traffic images with the labels may provide for a direct means of better training the neural network. For example, the neural network could receive the second sequence of traffic images as input and then the output of the neural network can be compared to the labels. Any difference between the output and the labels, may for example, be used in a deep learning algorithm to improve the operation of the neural network.

In another example, execution of the machine-executable instructions further causes the computational system to control the simulation program to test operation of the ECU using the first sequence of traffic images. Execution of the machine-executable instructions further causes the computational system to detect additional faults in the operation of the ECU using the image labels of the first sequence of traffic images. Execution of the machine-executable instructions further causes the computational system to generate additional modification commands configured for modifying programming of the automated control module using the detected additional faults. Execution of the machine-executable instructions further causes the computational system to modify the automated control module using the additional modification commands. This example may be beneficial because the same training data may be used twice in training the neural network of the ECU. For example, this may reduce the amount of time consuming and costly labeling of sequences of traffic images.

In another example, the ECU is a hardware ECU and the vehicle ECU testing unit is a hardware-in-the-loop testing system.

In another example, the vehicle testing system is a simulated ECU and the vehicle ECU testing system is a software-in-the-loop testing system.

In another example, the domain transfer diffusion model is configured to use a denoising neural network to perform repeated interference denoising steps to generate a traffic image descriptive of the second set of environmental conditions in response to receiving a traffic image descriptive of the first set of environmental conditions.

In another example, the denoising neural network is any one of the following:: a U-Net, a U-Net with residual Blocks, an attention augmented U-Net, a U-Net using one or more transformer blocks in a bottleneck layer, an autoencoder, a variational autoencoder, an ImageNet, ResNet, and a convolutional neural network. The various variants of the U-Net may be freely combined. The U-Net variants, the ImageNet, the ResNet, and the convolutional neural network may be combined with the autoencoder or variational autoencoder by having the U-Net variants, the ImageNet, the ResNet, or the convolutional neural network operate on the latent space of the autoencoder or the variational autoencoder.

In another example, the diffusion model is configured such that the first set of environmental conditions are freely choosable. The use of the denoising neural network has been trained to produce images of the second set of environmental conditions and enables the first set of environmental conditions to be varied without the domain transfer diffusion model being specifically trained for this.

In another example, the first set of environmental conditions and the second set of environmental conditions comprise any one of the following: an ambient lighting condition, a surface ice condition, a surface snow condition, a surface water condition, a fog condition, a precipitation condition, and combinations thereof. The ambient lighting condition may for example describe how much lighting and the sun position. The surface ice condition may describe what type and amount of ice is on a road surface. Likewise, the surface snow condition may describe the type and thickness of snow on the roadway. The surface water condition may describe the amount and condition of water on the roadway also. The fog condition may for example indicate how much fog there is and the distance invisibility. The fog condition is often times related to the ambient lighting conditions. When it is darker, the fog may provide more of an obstruction in the evening than during daylight hours. The precipitation condition may for example describe what type of rain or snow and the amount is falling.

In another example, the image labels identify objects in the traffic images and/or the image labels comprise bounding boxes identifying object locations in the traffic images. For example, the image labels may be used to identify the location and the type of objects which are in the sequence of traffic images.

In another example, the domain transfer diffusion model is a latent diffusion model. The use of a latent diffusion model may be beneficial because these provide very accurate domain transfer of images and other data.

In another example, the sequence of traffic images is any one of the following: a sequence of optical images, sequential frames, a sequence of radar images, and a sequence of LiDAR images. All of these examples represent various types of image data which may have labels assigned to them.

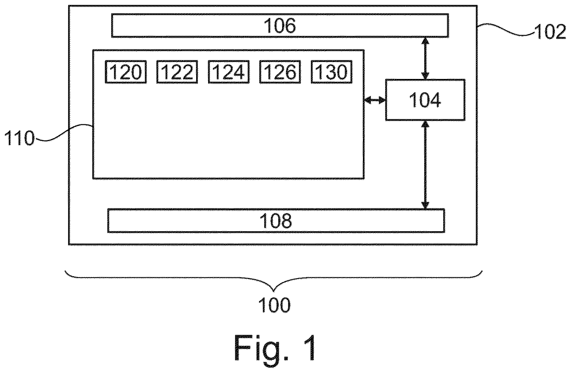

Fig. 1 illustrates an example of a vehicle testing system 100. The vehicle testing system 100 is shown as comprising a computer 102. The computer 102 is intended to represent one or more computers located at one or more locations. The computer 102 comprises a computational system 104. Likewise, the computational system 104 is intended to represent one or more computational systems or computing cores located at one or more locations. The computational system 104 is shown as being in communication with an optional hardware interface 106 and an optional user interface 108. The hardware interface 106 may enable the computational system 104 to communicate with other components of the vehicle testing system 100 if they are present. The user interface 108 may enable a user or operator to control the operation and function of the vehicle testing system 100.

The computational system 104 is shown as being in further communication with a memory 110. The memory 110 is intended to represent various types of memory which may be accessible to the computational system 104. The memory 110 is shown as containing machine-executable instructions 120 that enable the computational system 104 to provide various data processing and numerical tasks. The memory 110 is further shown as containing a domain transfer diffusion model 122. The domain transfer diffusion model 122 is configured to change a traffic image descriptive of a first set of environmental conditions into a traffic image descriptive of a second set of environmental conditions. For example, transferring a traffic image on a sunny day to a snowy or foggy conditions.

The memory 110 is further shown as containing a first sequence of traffic images 124. These may for example be a video feed recorded from a vehicle in traffic. The memory 110 is further shown as containing image labels 126 that were extracted from the first sequence of traffic images 124. For example, each frame may have image labels which may for example contain bounding boxes and identifiers of the contents of the bounding boxes. This may identify road hazards and objects which may be used for guiding or assisting the control of a vehicle. The memory 110 is further shown as containing a second sequence of traffic images 128 that was obtained by inputting the first sequence of traffic images into the domain transfer diffusion model 122. The first sequence of traffic images 124 has the first set of environmental conditions and the second sequence of traffic images 128 has the second set of environmental conditions. The memory 110 then contains the second sequence of traffic images 130 with the image labels 126 appended or added to them. For example, one may go through frame-by-frame and transfer the image labels from the first sequence of traffic images 124 to the second sequence of traffic images 128. As only the environmental conditions change, the location of objects within the second sequence of traffic images 130 would not change. Therefore, the image labels 126 are still valid.

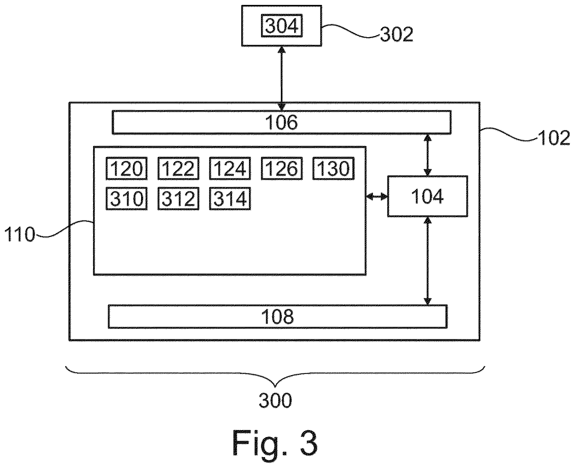

The production of a second sequence of traffic images with the image labels may be beneficial as it may be used to train or test a trained ECU. As is depicted in Fig. 3 below, the vehicle testing system may contain a simulation program which may use the first sequence of traffic images and the second sequence of traffic images to train or test the ECU. Because the first sequence of traffic images and the second sequence of traffic images contain images with the same content and the same image labels they enable the accurate comparison of the performance of an ECU for only environmental changes.

Even if it where conceivable to record and label a second sequence of traffic images "from scratch", i.e. by conventionally capturing separate images and then labeling the captured images, the effort involved would be considerable. It may be time consuming and costly to produce additional sequences of traffic images with labels. The domain transfer from the first set of environmental conditions to the second set of environmental conditions firstly saves the need to collect a further set of traffic images with the second set of environmental conditions. Secondly, the image labels are transferred also which saves labor in manually labeling a new sequence of traffic images.

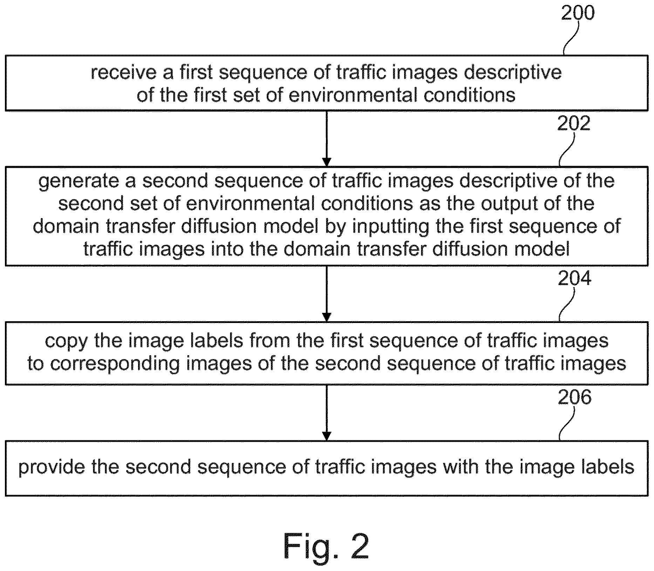

Fig. 2 shows a flowchart which illustrates a method of operating the vehicle testing system 100 of Fig. 1. In step 200, the first sequence of traffic images 124 is received. The first sequence of traffic images 124 are descriptive of the first set of environmental conditions. In step 202, the second sequence of traffic images 128 is generated by inputting the first sequence of traffic images 124 into the domain transfer diffusion model 122. In step 204, the image labels 126 are copied from the first sequence of traffic images 124 to the second sequence of traffic images 128. In step 206, the second sequence of traffic images 130 with the image labels 126 are provided.

Fig. 3 illustrates a further example of a vehicle testing system 300. In this case, the hardware interface 106 is in communication with an ECU 302. The ECU 302 implements an automated control module 304 that is configured for controlling a portion or some components of a vehicle. For example, it may be an automated driving system or a driver assistance module. This is an example of a hardware-in-the-loop configuration. The ECU 302 could also be simulated instead of having the hardware interface 106 talk to a physical module.

The memory 110 is shown as additionally containing a simulation program 310. This is able to send signals and communicate with the ECU 302 to simulate a driving or control operation. The memory 110 is shown as containing some detected faults 312 that occurred when using the simulation program 310 in conjunction with the second sequence of traffic images 130 with the image labels 126. These for example may be faults 312 where the automated control module 304 made incorrect control decisions or failed to identify objects and correctly make image labels for the second sequence of traffic images 128 itself. The memory 110 is further shown as containing modification commands 314 that are used to modify or update the automated control module 304. For example, the detected faults 312 could be used as training data and the modification commands 314 are commands used to modify the automated control module 304 using this training data 312.

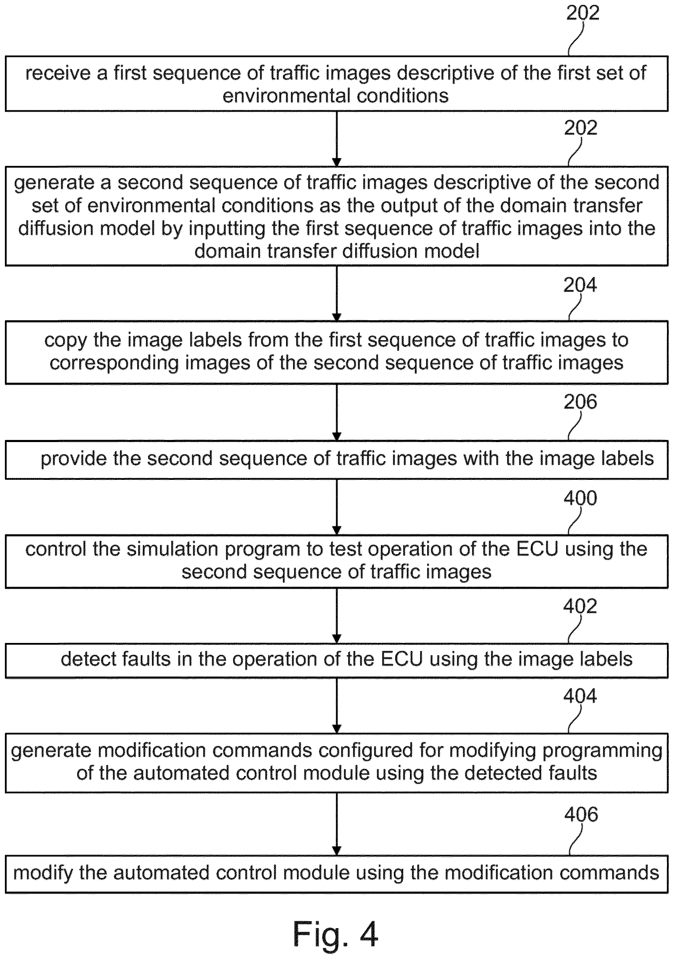

Fig. 4 shows a flowchart which illustrates a method of operating the vehicle testing system 300 of Fig. 3. Steps 200, 202, 204, and 206 are performed as is illustrated in Fig. 2. In step 400, the simulation program 310 is controlled to test the operation of the ECU 302 using the second sequence of traffic images 128. In step 402, the faults 312 are detected in the operation of the ECU 302 using the image labels 126. In step 404, the modification commands 314 are generated. The modification commands 314 are configured for modifying the programming of the automated control module 304 using the detected faults 312. In step 406, the automated control module 304 is modified using the modification commands 314.

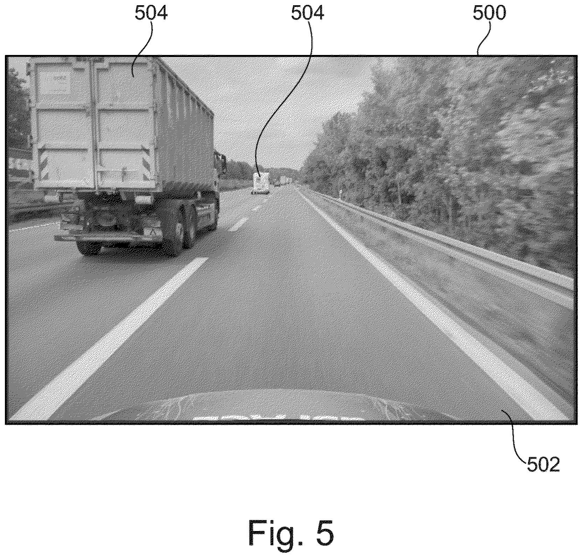

Fig. 5 illustrates an example of a traffic image 500 that is descriptive of a first set of environmental conditions. In this case, the conditions are bright and sunny. There is a roadway 502 and several other vehicles 504 travelling on the roadway. It can be seen that the roadway 502 and the vehicles 504 are clearly visible.

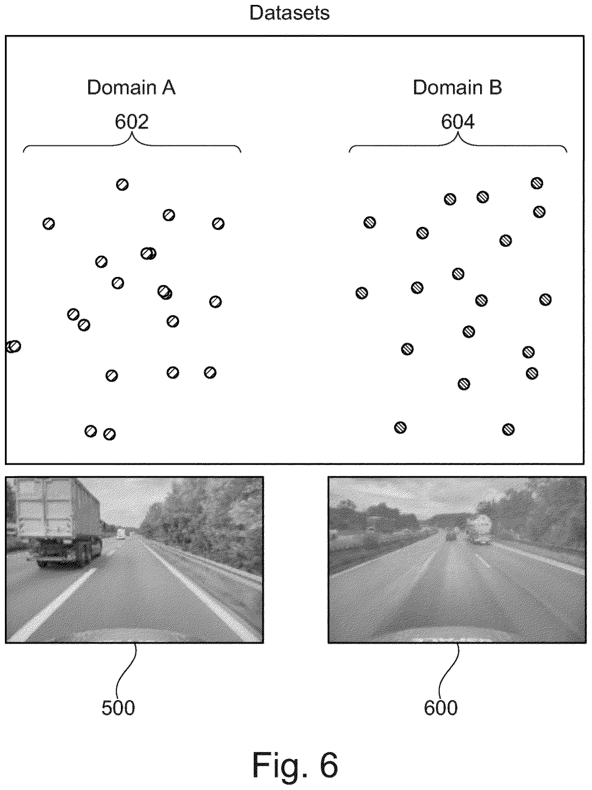

Fig. 6 shows additionally a traffic image descriptive of the second environmental conditions 600 next to the traffic image 500 of Fig. 5. Fig. 5 illustrates sunny and dry conditions, whereas the traffic image 600 represents a condition with rainy conditions. The roadway and other vehicles are not nearly as visible. The sequence of traffic images descriptive of the first set of environmental conditions 602 can be thought of as images in a first dataset and the sequence of traffic images 604 descriptive of the second environmental conditions can be thought of as images in a second dataset.

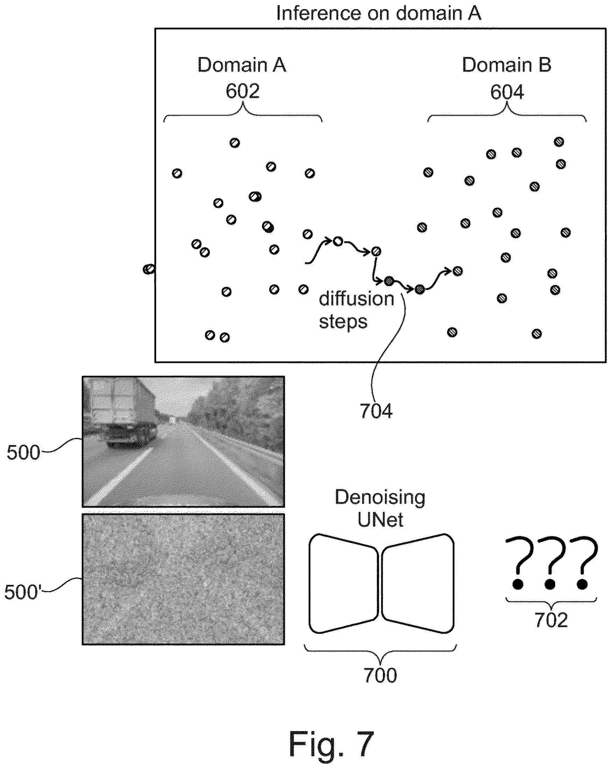

Fig. 7 illustrates the transfer of an image from the domain of the first set of environmental conditions 602 to the domain of the second set of environmental conditions 604. Visible is the traffic image 500 in the first set of environmental conditions. To change the domain noise 500' has been added to image 500. The image 500' is then input into a denoising neural network 700 that has been trained on denoising images in the second domain with the second set of environmental conditions 604. The output of the denoising neural network 700, 702 will be an image which is the same as image 500 but also depicts it in rainy conditions. Above there are a number of diffusion steps 704 which illustrate how an image is gradually transferred by repeating this process over and over again.

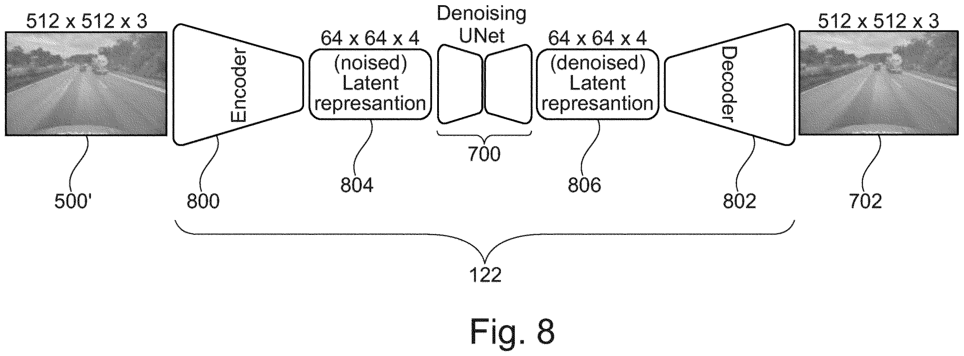

Fig. 8 illustrates an alternative means of implementing the domain transfer diffusion model 122. In this example, instead of operating directly on the images, the denoising neural network 700 operates on latent representations 804, 806. The traffic image 500 descriptive of the first set of environmental conditions is input into an encoder 800 that changes the noise version of the image into a denoised latent representation 804. The denoising neural network 700 then removes the noise and outputs a denoised latent representation 806. The denoised latent representation 806 is then input into a decoder 802 which outputs the denoised image 702. An advantage of using this arrangement, which is similar to an autoencoder, is that the denoising neural network 700 is smaller and needs less training to function effectively.

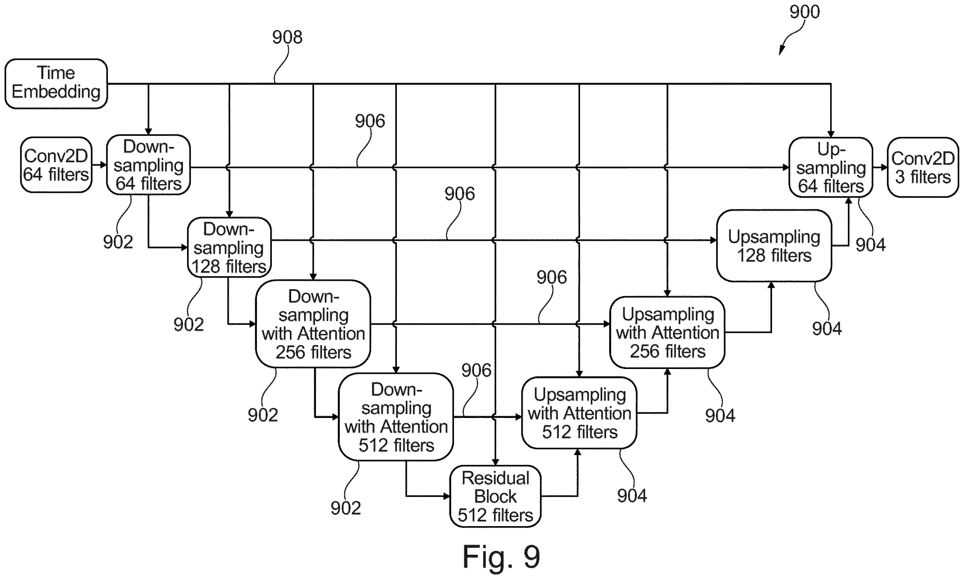

Fig. 9 illustrates an example of a denoising U-net with time embedding. The U-net is constructed from a cascade of down sampling blocks 902 followed by a cascade of up sampling blocks 904. The down sampling blocks 902 comprise of a number of residual blocks (in this example two) followed by an average pooling layer with a kernel size of two which halves the resolution of the input feature map. The down sampling layers comprise additional attention layers that are added after each Residual layer. To provide the up-sampling blocks not only the semantic information from the previous layers, but also more spatial context there are skip connections 906.

In the up sampling blocks the output feature map from the previous layer is concatenated with the feature maps from the skip connections 906. These concatenated feature maps are then fed to a number of Residual Blocks, followed by a 2D interpolation layer to increase the resolution again. Attention layers are used in the earlier up sampling Blocks.

To give each layer context in which timestep of the denoising process the model currently is in, a temporal embedding 908 is used given to the Residual Blocks as additional context.

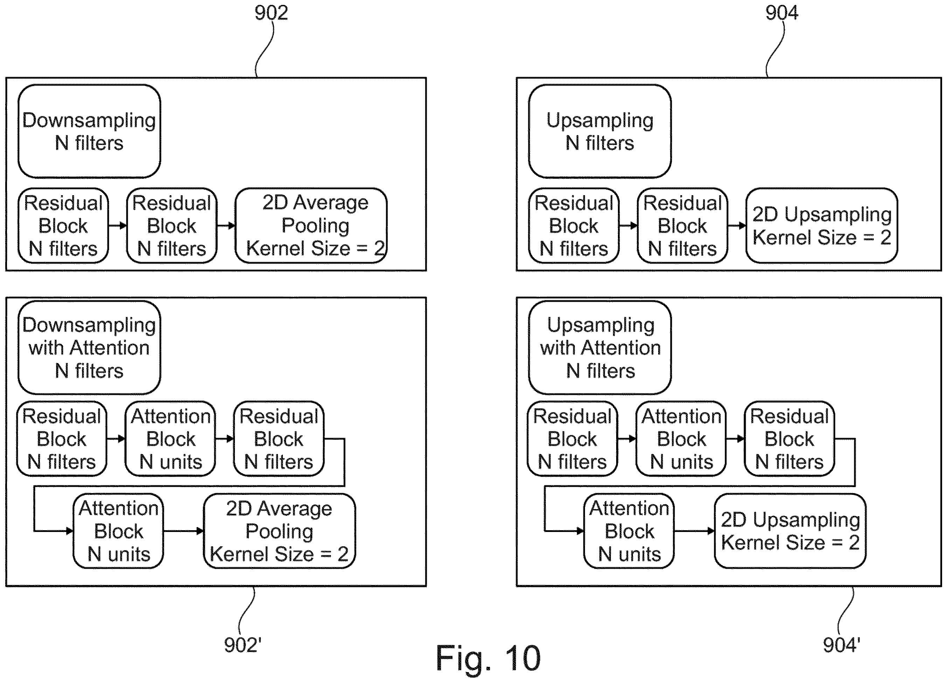

Fig. 10 illustrates the example of the down sampling blocks 902 and up sampling blocks 904 without attention. As an alternative, down sampling blocks 902' with attention n filters and up sampling blocks with attention filters 904' are also shown.

While the invention has been illustrated and described in detail in the drawings and foregoing description, such illustration and description are to be considered illustrative or exemplary and not restrictive; the invention is not limited to the disclosed examples.

It is understood that one or more of the aforementioned examples or embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a computational system. 'Computer storage' or 'storage' is a further example of a computer-readable storage medium. Computer storage is any non-volatile computer-readable storage medium. In some embodiments computer storage may also be computer memory or vice versa.

A 'computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further understood that, when not mutually exclusive, combinations of blocks in different flowcharts, illustrations, and/or block diagrams may be combined. These computer program instructions may be provided to a computational system of a general-purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

### REFERENCE SIGNS LIST

- 100: vehicle testing system
- 102: computer
- 104: computational system
- 106: optional hardware interface
- 108: optional user interface
- 110: memory
- 120: machine executable instructions
- 122: domain transfer diffusion model
- 124: first sequence of traffic images
- 126: image labels extracted from first sequence of traffic images
- 128: second sequence of traffic images
- 130: second sequence of traffic images with image labels
- 200: receive a first sequence of traffic images descriptive of the first set of environmental conditions
- 202: generate a second sequence of traffic images descriptive of the second set of environmental conditions as the output of the domain transfer diffusion model by inputting the first sequence of traffic images into the domain transfer diffusion model
- 204: copy the image labels from the first sequence of traffic images to corresponding images of the second sequence of traffic images and
- 206: provide the second sequence of traffic images with the image labels
- 300: vehicle testing system
- 302: ECU
- 304: automated control module
- 310: simulation program
- 312: detected faults (training data)
- 314: modification commands
- 400: control the simulation program to test operation of the ECU using the second sequence of traffic images
- 402: detect faults in the operation of the ECU using the image labels
- 404: generate modification commands configured for modifying programming of the automated control module using the detected faults
- 406: modify the automated control module using the modification commands
- 500: traffic image descriptive of the first set of environmental conditions
- 500': traffic image descriptive of the first set of environmental conditions with added noise
- 502: roadway
- 504: vehicle
- 600: traffic image descriptive of the second set of environmental conditions
- 602: sequence of traffic images descriptive of the first set of environmental conditions
- 604: sequence of traffic images descriptive of the second set of environmental conditions
- 700: denoising neural network
- 702: output of neural network
- 704: diffusion steps
- 800: encoder
- 802: decoder
- 804: noised latent representation
- 806: denoised latent representation
- 900: denoising u-net with time embedding
- 902: down sampling blocks
- 904: upsampling blocks
- 906: skip connections
- 908: temporal embedding connected to residual blocks

## Claims

1. A vehicle testing system (100, 300) comprising:
- a memory (110) storing machine executable instructions (120) and a domain transfer diffusion model (122), wherein the domain transfer diffusion model is configured for, in response to receiving a traffic image (500) descriptive of a first set of environmental conditions, outputting a traffic image (600) descriptive of a second set of environmental conditions;
- a computational system (104), wherein execution of the machine executable instructions causes the computational system to:
- receive (200) a first sequence of traffic images (124) descriptive of the first set of environmental conditions, wherein the traffic images of the first sequence of traffic images comprise respectively assigned image labels (126);
- generate (202) a second sequence of traffic images (128) descriptive of the second set of environmental conditions as the output of the domain transfer diffusion model by inputting the first sequence of traffic images into the domain transfer diffusion model;
- copy (204) the image labels from the first sequence of traffic images to corresponding images of the second sequence of traffic images; and
- provide (206) the second sequence of traffic images (130) with the image labels.

2. The vehicle testing system of claim 1, wherein the vehicle test system further comprises an ECU (302), wherein the ECU comprises an automated control module adapted for controlling components of a vehicle, wherein the memory further comprises a simulation program (310) configured for testing the ECU, wherein execution of the machine executable instructions further causes the computational system to:
- control (400) the simulation program to test operation of the ECU using the second sequence of traffic images; and
- detect (402) faults (312) in the operation of the ECU using the image labels.

3. The vehicle testing system of claim 2, wherein execution of the machine executable instructions further causes the computational system to:
- generate (404) modification commands (314) configured for modifying programming of the automated control module using the detected faults; and
- modify (406) the automated control module using the modification commands.

4. The vehicle testing system of claim 2 or 3, wherein the automated control module is adapted for controlling any one of the following of a vehicle: a component for a driving assistance function, an adaptive cruise control function, an autopilot function, an autonomous driving function, and combinations thereof.

5. The vehicle testing system of claim 2, 3, or 4, wherein the automated control module comprises a neural network (700) configured for receiving the second sequence of traffic images, wherein the modification commands are training data, and wherein the automated control module is modified by training the neural network with the training data.

6. The vehicle testing system of any one of claims 2 through 5, wherein execution of the machine executable instructions further causes the computational system to:
- control the simulation program to test operation of the ECU using the first sequence of traffic images;
- detect additional faults in the operation of the ECU using the image labels;
- generate additional modification commands configured for modifying programming of the automated control module using the detected additional faults; and
- modify the automated control module using the additional modification commands.

7. The vehicle testing system of any one of claims 2 through 6, wherein any one of the following:
- the ECU is a hardware ECU and the vehicle ECU testing system is a hardware-in-the-loop testing system, and
- the ECU is a simulated ECU and the vehicle ECU testing system is a software-in-the-loop testing system.

8. The vehicle testing system of any one of the preceding claims, wherein the domain transfer diffusion model is configured to use a denoising neural network (700) to perform repeated interference denoising steps to generate a traffic image descriptive of the second set of environmental conditions in response to receiving a traffic image descriptive of the first set of environmental conditions.

9. The vehicle testing system of any one of the preceding claims, wherein the denoising neural network is any one of the following: a U-net, a U-Net with residual Blocks, an attention augmented U-Net, a U-Net using one or more transformer blocks in a bottleneck layer, an autoencoder, a variational autoencoder, an ImageNet, ResNet, and a convolutional neural network.

10. The vehicle testing system of any one of the preceding claims, wherein the diffusion model is configured such that the first set of environmental conditions are freely choosable.

11. The vehicle testing system of any one of the preceding claims, wherein the first set of environmental conditions and the second set of environmental conditions comprise any one of the following: an ambient lighting condition, a surface ice condition, a surface snow condition, a surface water condition, a fog condition, a precipitation condition, and combinations thereof.

12. The vehicle testing system of any one of the preceding claims, wherein any one of the following: the image labels identify objects in the traffic images, the image labels comprise bounding boxes identifying object locations in the traffic images, and combinations thereof.

13. The vehicle testing system of any one the preceding claims, wherein the domain transfer diffusion model is a latent diffusion model.

14. The vehicle testing system of any one of the preceding claims, wherein then sequence of traffic images is any one of the following: a sequence of optical images, sequential video frames, a sequence of radar images, and a sequence of lidar images.

15. A method of vehicle testing comprising:
- receiving (200) a first sequence of traffic images (124) descriptive of ta first set of environmental conditions, wherein the traffic images of the first sequence of traffic images comprise respectively assigned image labels (126);
- generating (202) a second sequence of traffic images (128) descriptive of a second set of environmental conditions as the output of a domain transfer diffusion model by inputting the first sequence of traffic images into a domain transfer diffusion model (122), wherein the domain transfer diffusion model is configured for, in response to receiving a traffic image descriptive of a first set of environmental conditions, outputting a traffic image descriptive of a second set of environmental conditions;
- copying (204) the image labels from the first sequence of traffic images to corresponding images of the second sequence of traffic images; and
- providing (206) the second sequence of traffic images (130) with the image labels.

16. A computer program comprising machine executable instructions (120) configured for performing the method of claim 16.
